# EUROPÄISCHE PATENTSCHRIFT

(11) **EP 1 062 144 B1**
(45) Veröffentlichungstag und Bekanntmachung des Hinweises auf die Patenterteilung: **29.09.2004**
(21) Anmeldenummer: 99929059.6
(22) Anmeldetag: 30.04.1999
(51) Int. Cl.: B62D 17/00, B62D 7/20

(54) **SPURSTANGE FÜR KRAFTFAHRZEUGE**
TIE ROD FOR MOTOR VEHICLES
BARRE D'ACCOUPLEMENT POUR VEHICULES AUTOMOBILES

(30) Priorität: 07.01.1999 DE 19900264
(43) Veröffentlichungstag der Anmeldung: 27.12.2000
(73) Patentinhaber: ZF Lemförder Metallwaren AG, 49441 Lemförde (DE)
(72) Erfinder: SOKOLIHS, Dirk, D-49565 Bramsche (DE); SCHMUDDE, Norbert, D-49080 Osnabrück (DE); HOLLE, Herbert, D-32351 Stemwede (DE)
(86) Internationale Anmeldenummer: PCT/DE1999/001274
(87) Internationale Veröffentlichungsnummer: WO 2000/040449

(56) Entgegenhaltungen:
- EP-A- 0 771 717
- US-A- 3 938 822

## Beschreibung

Die Erfindung betrifft eine Spurstange für Kraftfahrzeuge nach dem Oberbegriff des Patentanspruches 1

Derartige Spurstangen werden in Kraftfahrzeugen insbesondere für die lenkbaren Vorderräder verwendet. Infolge der fahrzeugunterseitigen Befestigung sind sie in einem hohen Maße Verschmutzungen und Witterungseinflüssen ausgesetzt. Bekannte Ausführungen von Spurstangen für Kraftfahrzeuge bestehen zumeist aus einem Rohr in dessen Endbereich wenigstens ein Innengewinde eingebracht ist In diesem Gewindebereich ist ferner häufig eine Schlitzung des Rohrendes vorgesehen. In das Rohrende wird bei den bekannte Ausführungen ein Kugelgelenkgehäuseschaft, der einstückig an dem Gehäuse eines Kugelgelenkes angeformt ist, eingeschraubt.

Es sind aber auch Ausführungen bekannt, bei denen in das Innengewinde des Rohrendes eine mit einem Ausengewinde versehene Justierhülse eingeschraubt wird. Die Justierhülse weist ihrerseits ein Innengewinde auf, in welchem dann der Kugelgelenkgehäuseschaft über ein Gewinde aufgenommen ist. Eines der in der Justierhülse vorgesehenen Gewinde ist dabei ein linksgängiges, während das andere ein rechtsgängiges Gewinde ist. Um durch eine Verdrehung der Justierhülse eine Bewegung der Bauteile relativ zu einander zu ermöglichen ist außenseitig an der Justierhülse eine Schlüsselfläche angeformt. Infolge der gegenläufigen Gewinde der Justierhülse werden das Rohr und das Kugelgelenk bei einer Verdrehung der Justierhülse auf einander zu oder von einander weg bewegt, wodurch eine axiale Verstellbewegung der Bauteile realisierbar ist.

Aus der US 3,938,822 ist eine Spurstange für Kraftfahrzeuge nach dem Oberbegriff des Anspruchs 1 bekannt. Die Justierhülse verfügt bei dieser Ausführung über ein zu der ersten Drehrichtung entgegengesetzt gängiges Außengewinde, auf das ein Kugelgelenkgehäuseschaft eines endseitig an der Spurstange vorhandenen Kugelgelenkes geschraubt ist. Über eine an der Justierhülse angeformte Schlüsselfläche wird eine axiale Verstellbewegung der Verbindungsstange relativ zu dem Kugelgelenk ermöglicht. Sowohl der Kugelgelenkgehäuseschaft, als auch die Justierhülse weisen einen Längsschlitz auf, der sich in der Justierhülse durch die Schlüsselfläche hindurch bis zum Ende der Justierhülse erstreckt.

Es sind weiterhin Spurstangen für Kraftfahrzeuge bekannt die eine Justierhülse aufweisen in welche einseitig ein oder mehrere Schlitze eingebracht sind. Hieraus ergeben sich mehrere Nachteile. Wird beispielsweise der Schlitz auf der Seite der Justierhülse eingebracht an der die Schlüsselfläche angeformt ist, so wird die Justierhülse während der Verdrehbewegung ungebührlich stark verformt. In Extremfällen kann es zu einer Zerstörung der Justierhülse kommen. Darüber hinaus besteht die Gefahr, dass die Schlitze in dem Rohr und die Schlitze in der Justierhülse sich überdecken so dass das Eindringen von Wasser und Verunreinigungen in das Innere der Spurstange möglich wird. Durch die entstehende Korrosion im Innenraum der Spurstange ist letztlich der Ausfall der gesamten Baugruppe zu befürchten, was bei derartigen Sicherheitsbauteilen ausgeschlossen werden muß.

Der Erfindung liegt die technische Problemstellung zugrunde, eine Spurstange für Kraftfahrzeuge zu entwickeln, bei der das Eindringen von Wasser und Verunreinigungen wirksam verhindert wird. Darüber hinaus soll eine konstante und gleichmäßige Festsetzung des Kugelgelenkes im Rohrschaft erreicht werden.

Diese technische Problemstellung wird mit den Merkmalen des Patentanspruches 1 gelöst. Weitere Ausgestaltungen der Erfindung sind Gegenstand der Unteransprüche.

Bei einer erfindungsgemäßen Spurstange für Kraftfahrzeuge wird in die Justierhülse wenigstens ein Tauchschlitz eingebracht. Dadurch ist die Schlüsselfläche eine in sich geschlossene Fläche so daß Verformungen während der Verstellbewegung der Justierhülse wirksam verhindert werden.
Die Einbringung eines Tauchschlitzes in die Justierhülse hat weiterhin den Vorteil, daß insgesamt eine Erhöhung der Formstabilität der Justierhülse und damit der gesamten Spurstangenbaugruppe erreicht wird.
Auf der Außenmantelfläche des die Justierhülse aufnehmenden Rohres ist eine Klemmschelle oder ein anderes, geeignetes Klemmittel zur Befestigung der Bauteile gegeneinander aufgesetzt.

Weiterhin besteht die Möglichkeit die Justierhülse als eine Art Adapter auszuführen. Das bedeutet, es können für erfindungsgemäße Spurstangen einheitliche Rohrdurchmesser beziehungsweise einheitliche Kugelgelenkgehäuseschaftdurchmesser eingesetzt werden. Die Differenz in den Abmaßen wird über die Justierhülse ausgeglichen. Es konnte somit ein Baukastensystem geschaffen werden.

Eine weitere vorteilhafte Ausgestaltung der Erfindung sieht vor, daß die Tauchschlitze überwiegend axial- oder spiralförmig verlaufend in die Justierhülse eingebracht sind. Darüber hinaus können die Tauchschlitze auf die geometrische Mittellinie der Justierhülse projiziert gesehen, mit dieser einen spitzen Winkel einschließen oder in sich kreuzender Anordnung verlaufen.
Weitere Anordnungen der Tauchschlitze sind denkbar. Erfindungsgemäß ist es ausreichend einen einzigen Tauchschlitz in die Justierhülse einzubringen. Selbstverständlich können aber auch mehrere Tauchschlitze vorgesehen werden. So ist es erfindungsgemäß beispielsweise möglich, zwei diametral entgegengesetzt zu einander angeordnete Tauchschlitze oder drei um 120° Grad zu einander versetzt angeordnete Tauchschlitze in die Justierhülse einzuarbeiten.

Auch eine T-förmige Geometrie der Tauchschlitze liegt im Bereich des Erfindungsgedankens. Dabei ist zu bemerken, daß sowohl die sich kreuzende Anordnung der Tauchschlitze als auch die T-Form der Tauchschlitze elastische Bereiche in der Justierhülse erzeugen, sodaß eine optimale Verspannung der Bauteile durch die Klemmschelle ermöglicht wird. Um der gesamten Spurstangenbaugruppe insgesamt eine hinreichende Stabilität zu verleihen, sollten die Tauchschlitze eine Breite von 2 bis 6 mm nicht überschreiten. Besonders vorteilhaft ist eine Schlitzbreite von 4 mm. Die Längenausdehnung der Tauchschlitze kann ebenfalls variieren. Sie sollte jedoch erfindungsgemäß zwischen der Hälfte und zwei Drittel der Gesamtlänge der Justierhülse betragen.
Da die Spurstange im radnahen Bereich des Kraftfahrzeuges in verstärktem Maße Spritzwasser und anderen Verunreinigungen ausgesetzt ist, ist es ferner von Vorteil, die Spurstange und insbesondere die Justierhülse mit einem Oberflächenschutz zu versehen.
Dieser kann in an sich bekannter Weise aus einer Zink-Eisen-Beschichtung bestehen.

Bevorzugte Ausführungsbeispiele der erfindungsgemäßen Lösung werden nachstehend unter Bezugnahme auf die zugehörigen Zeichnungen näher erläutert.
Es zeigen:
Figur 1: Ausschnittsweise das Endstück einer erfindungsgemäßen Spurstange,
Figur 2: eine erste mögliche Ausführungsform einer Justierhülse und
Figur 3: eine zweite mögliche Ausführungsform einer erfindungsgemäßen Justierhülse.

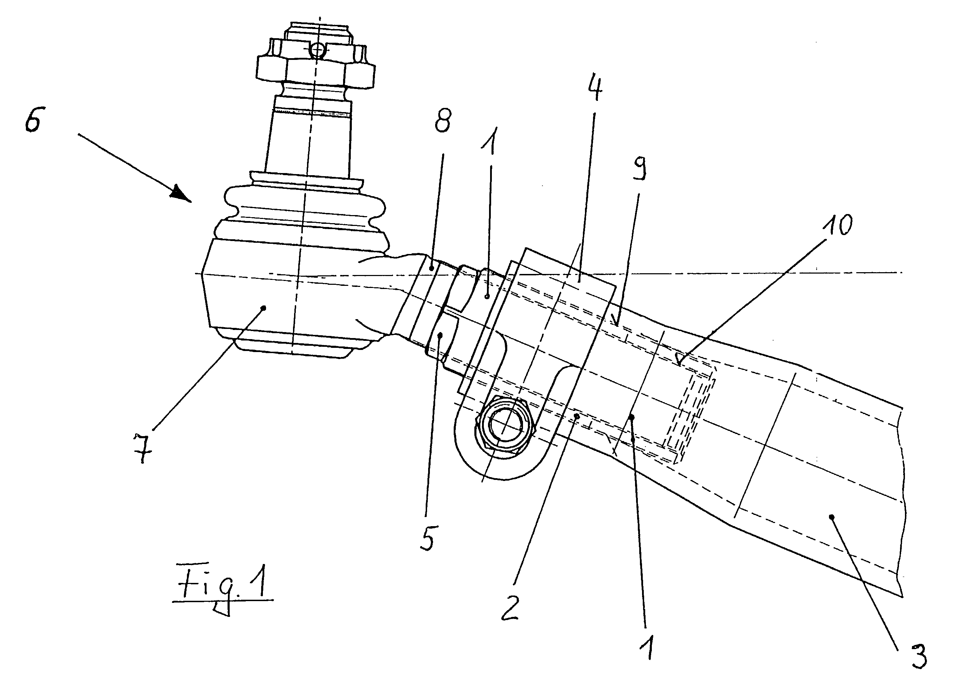

In der Figur 1 ist ausschnittsweise eine Ausführungsform einer erfindungsgemäßen Spurstange für Kraftfahrzeuge dargestellt. Das endseitig eingezogene, das heißt, im Durchmesser reduzierte Rohrende des Rohres 3 weist dabei ein erstes Innengewinde 9 auf. In dieses Innengewinde ist eine Justierhülse 1 eingeschraubt. Die Justierhülse weist ihrerseits ein Innengewinde 10 auf. In dieses zweite Innengewinde 10 ist der Kugelgelenkgehäuseschaft 8 eines Kugelgelenkes 6 eingesetzt. Der Kugelgelenkgehäuseschaft ist einstückig an dem Kugelgelenkgehäuse 7 des zuvor genannten Kugelgelenkes 6 angeformt. Das erste Innengewinde 9 und das zweite Innengewinde 10 haben einen entgegengesetzt gerichteten Verlauf. Am äußeren, nicht eingeschraubten Ende der Justierhülse 1 ist ferner eine Schlüsselfläche 5 angeformt. An dieser Schlüsselfläche 5 kann im vorliegenden Fall ein Werkzeug, beispielsweise ein Maulschlüssel, angesetzt werden, um die Justierhülse zu verdrehen. Eine Verdrehbewegung der Justierhülse 1 bewirkt dabei infolge der entgegengesetzt gängigen Gewinde 9 und 10 entweder ein aufeinander zu bewegen oder ein voneinander weg bewegen des Rohres 3 und des Kugelgelenkes 6. Mittels einer Klemmschelle 4 werden die Bauteile gegen selbsttätige Bewegung gesichert, wenn das erforderliche Einstellmaß erreicht ist.

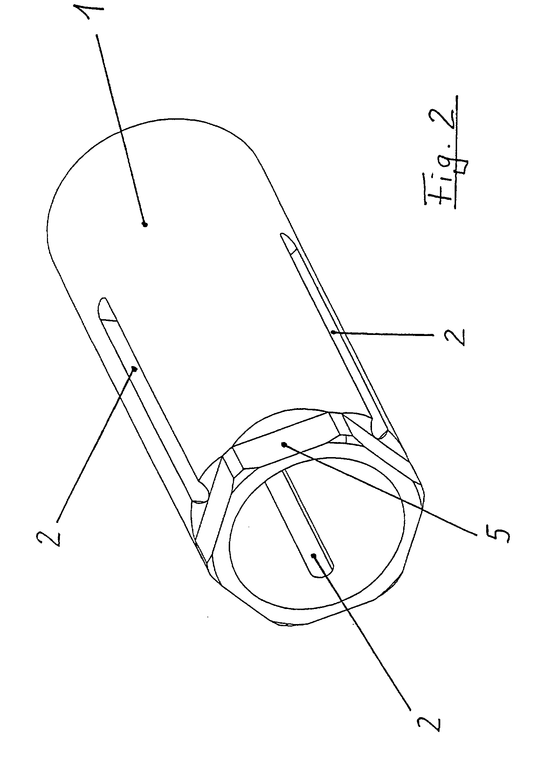

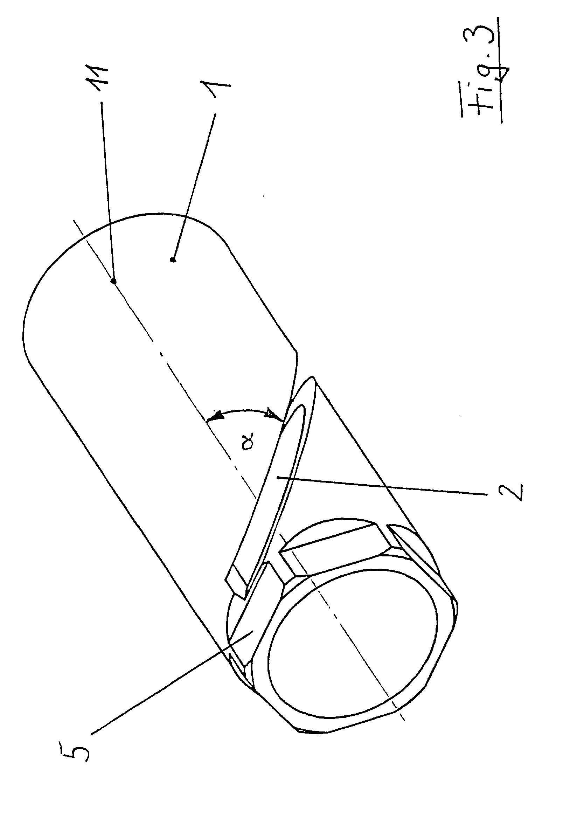

Aus den Figuren 2 und 3 gehen beispielhaft zwei erfindungsgemäße Justierhülsenausführungen hervor. Diese Justierhülsen 1 weisen jeweils einen Tauchschlitz 2 und eine angeformte Schlüsselfläche 5 auf. Insoweit besteht bauliche Gleichheit der Justierhülsen 1. Im Unterschied zu der in Figur 2 gezeigten Justierhülse, bei der drei um 120° Grad versetzt zu einander angeordnete Tauchschlitze vorgesehen sind, weist die Justierhülse 1 in der Figur 3 einen als Diagonalschlitz 2 bezeichneten Tauchschlitz auf Auf die Mittellinie 11 der Justierhülse 1 projiziert schließt der Tauchschlitz 2 mit der Mittellinie 11 einen spitzen Winkel ein. Dieser ist in der Figur 3 mit "∝" bezeichnet.

Durch eine erfindungsgemäße Ausführung einer Spurstange für Kraftfahrzeuge wird insgesamt eine sehr stabile Baugruppe erzeugt die zudem eine Feineinstellung der Spurweite am Kraftfahrzeug ermöglicht. Ein Übereinanderliegen der Schlitze im Rohr 3 und des Tauchschlitzes beziehungsweise der Tauchschlitze bei einer erfindungsgemäßen Spurstange kann wirksam dadurch verhindert werden, daß die Tauchschlitze in der Justierhülse ausschließlich in Bereichen eingebracht werden, die außerhalb der Schlitzungen des Rohres liegen. Somit wird wirksam das Eindringen von Wasser oder Verunreinigungen in die Spurstange und damit eine vorzeitige Korrosion und Alterung der gesamten Baugruppe verhindert.

Selbstverständlich können die vorstehend genannten und die nachfolgend noch zu erläuternden Merkmale der Erfindung nicht nur in der jeweils angegebenen Kombination, sondern auch in anderen Kombinationen, zusätzlich oder in Alleinstellung verwendet werden, ohne dabei den Rahmen der Erfindung zu verlassen.

### Bezugszeichenliste

- 1: Justierhülse
- 2: Tauchschlitz
- 3: Rohr
- 4: Klemmschelle
- 5: Schlüsselfläche
- 6: Kugelgelenk
- 7: Kugelgelenkgehäuse
- 8: Kugelgelenkgehäuseschaft
- 9: Erstes Innengewinde
- 10: Zweites Innengewinde
- 11: Mittellinie
- ∝: Winkel

## Patentansprüche

1. Spurstange für Kraftfahrzeuge mit einem wenigstens einseitig mit einem in einer ersten Drehrichtung gängigen Innengewinde versehenen, zumindest bereichsweise geschlitzten Rohr (3), in das endseitig eine Justierhülse (1) eingeschraubt ist, wobei in die Justierhülse (1) über ein zu der ersten Drehrichtung entgegengesetzt gängiges Innengewinde ein Kugelgelenkgehäuseschaft (8) eines endseitig an der Spurstange vorhandenen Kugelgelenkes (6) eingeschraubt ist und über eine an der Justierhülse (1) angeformte Schlüsselfläche (5) eine axiale Verstellbewegung des Rohres (3) relativ zu dem Kugelgelenk ermöglicht wird, und, die Justierhülse (1) wenigstens einen Schlitz aufweist und eine auf der Außenmantelfläche des Rohres (3) festgelegte Klemmschelle (4) die Bauteile gegeneinander in ihrer Lage fixiert
**dadurch gekennzeichnet, dass** der Schlitz als Tauchschlitz (2) bezeichnet und, beidseitig begrenzt ist, so dass die Schlüsselfläche (5) eine in sich geschlossene Fläche bildet.

2. Spurstange für Kraftfahrzeuge nach Anspruch 1,
**dadurch gekennzeichnet, dass**
die Tauchschlitze (2) überwiegend axial- oder spiralförmig verlaufend in die Justierhülse (1) eingebracht sind, beziehungsweise auf die geometrische Mittellinie der Justierhülse (1) projiziert, mit dieser einen spitzen Winkel einschließen oder in sich kreuzender Anordnung verlaufen.

3. Spurstange für Kraftfahrzeuge nach Anspruch 1 oder 2,
**dadurch gekennzeichnet, dass**
zwei diametral entgegengesetzt zueinander angeordnete Tauchschlitze (2) in die Justierhülse (1) eingebracht sind.

4. Spurstange für Kraftfahrzeuge nach Anspruch 1 oder 2,
**dadurch gekennzeichnet, dass**
drei um 120° zueinander versetzt angeordnete Tauchschlitze (2) in die Justierhülse (1) eingebracht sind.

5. Spurstange für Kraftfahrzeuge nach einem der vorhergehenden Ansprüche,
**dadurch gekennzeichnet, dass**
die Tauchschlitze (2) annähernd eine T-Form aufweisen.

6. Spurstange für Kraftfahrzeuge nach einem der vorhergehenden Ansprüche,
**dadurch gekennzeichnet, dass**
die Tauchschlitze (2) eine Breite zwischen 2 und 6 mm, vorzugsweise jedoch eine Breite von 4 mm aufweisen.

7. Spurstange für Kraftfahrzeuge nach einem der vorhergehenden Ansprüche,
**dadurch gekennzeichnet, dass**
die Tauchschlitze (2) sich über eine Länge der Justierhülse (1) erstrecken, die annähernd 1/2 bis 2/3 der Gesamtlänge der Justierhülse (1) ausmacht.

8. Spurstange für Kraftfahrzeuge nach einem der vorhergehenden Ansprüche,
**dadurch gekennzeichnet, dass**
die Justierhülse (1) mit einem Oberflächenschutz versehen ist.

9. Spurstange für Kraftfahrzeuge nach Anspruch 8,
**dadurch gekennzeichnet, dass**
der Oberflächenschutz eine galvanische Zink-Eisen-Beschichtung ist.

## Claims

1. Track rod for motor vehicles, with a tube (3) which is provided at least on one side with an internal thread which has turns in a first direction of rotation, is slotted at least in certain regions and into which an adjustment sleeve (1) is screwed at the end, wherein a ball joint housing stem (8) of a ball joint (6), which is provided at the end of the track rod, is screwed into the adjustment sleeve (1) by way of an internal thread which has turns opposite to the first direction of rotation, and an axial displacement of the tube (3) relative to the ball joint can take place by way of a spanner face (5) which is formed on the adjustment sleeve (1), and the adjustment sleeve (1) comprises at least one slot and a clip (4), which is secured to the outer circumferential surface of the tube (3) and fixes the components against one another in their position,
**characterised in that**
the slot is called an insertion slot (2) and is bounded on both sides, so that the spanner face (5) forms a self-contained face.

2. Track rod for motor vehicles according to Claim 1,
**characterised in that**
the insertion slots (2) are made in the adjustment sleeve (1) so as to extend predominantly axially or spirally, and/or project onto the geometric centre line of the adjustment sleeve (1), form an acute angle with this or extend in an intersecting arrangement.

3. Track rod for motor vehicles according to Claim 1 or 2,
**characterised in that**
two insertion slots (2), which are disposed diametrically opposite one another, are made in the adjustment sleeve (1).

4. Track rod for motor vehicles according to Claim 1 or 2,
**characterised in that**
three insertion slots (2), which are staggered by 120° relative to one another, are made in the adjustment sleeve (1).

5. Track rod for motor vehicles according to any one of the preceding claims,
**characterised in that**
the insertion slots (2) are approximately T-shaped.

6. Track rod for motor vehicles according to any one of the preceding claims,
**characterised in that**
the insertion slots (2) are of a width of between 2 and 6 mm, although preferably a width of 4 mm.

7. Track rod for motor vehicles according to any one of the preceding claims,
**characterised in that**
the insertion slots (2) extend over a length of the adjustment sleeve (1) which constitutes approximately 1/2 to 2/3 of the total length of the adjustment sleeve (1).

8. Track rod for motor vehicles according to any one of the preceding claims,
**characterised in that**
the adjustment sleeve (1) is provided with a surface protection.

9. Track rod for motor vehicles according to Claim 8,
**characterised in that**
the surface protection is a zinc-iron electrodeposited coating.

## Revendications

1. Barre d'accouplement pour véhicule automobile comportant un tube (3) pourvu au moins d'un côté d'un taraudage tournant dans un premier sens de rotation, fendu au moins par endroits, dans lequel est vissée à une extrémité une douille d'ajustage (1), dans la douille d'ajustage (1) étant vissée, par un taraudage tournant en sens opposé au premier sens de rotation, une tige de boîtier (8) de joint sphérique d'un joint sphérique (6) prévu à une extrémité de la barre d'accouplement, et par une surface de clé (5) formée sur la douille d'ajustage (1), un mouvement de réglage axial du tube (3) par rapport au joint sphérique étant rendu possible, et la douille d'ajustage (1) présentant au moins une fente, et un collier de serrage (4), fixé sur la surface d'enveloppe extérieure du tube (3), fixant les composants dans leur position réciproque,
**caractérisée en ce que** la fente est désignée par fente de plongée (2) et est limitée des deux côtés, de telle sorte que la surface de clé (5) forme une surface fermée sur elle-même.

2. Barre d'accouplement pour véhicule automobile, selon la revendication 1,
**caractérisée en ce que**
les fentes de plongée (2) sont pratiquées dans la douille d'ajustage (1), en s'étendant principalement axialement ou en spirale, ou, projetées sur la ligne médiane géométrique de la douille d'ajustage (1), forment avec celle-ci un angle aigu ou s'étendent en se croisant.

3. Barre d'accouplement pour véhicule automobile, selon la revendication 1 ou 2,
**caractérisée en ce que** deux fentes de plongée (2) disposées diamétralement opposées l'une à l'autre sont pratiquées dans la douille d'ajustage (1).

4. Barre d'accouplement pour véhicule automobile, selon la revendication 1 ou 2,
**caractérisée**
**en ce que** trois fentes de plongée (2), disposées décalées de 120° les unes par rapport aux autres, sont pratiquées dans la douille d'ajustage (1).

5. Barre d'accouplement pour véhicule automobile, selon l'une des revendications précédentes,
**caractérisée en ce que**
les fentes de plongée (2) présentent approximativement une forme en T.

6. Barre d'accouplement pour véhicule automobile selon l'une des revendications précédentes,
**caractérisée en ce que**
les fentes de plongée (2) présentent une largeur comprise entre 2 et 6 mm, mais de préférence une largeur de 4 mm.

7. Barre d'accouplement pour véhicule automobile selon l'une des revendications précédentes,
**caractérisée en ce que**
les fentes de plongée (2) s'étendent sur une longueur de la douille d'ajustage (1) qui correspond approximativement à 1/2 à 2/3 de la longueur totale de la douille d'ajustage (1).

8. Barre d'accouplement pour véhicule automobile selon l'une des revendications précédentes,
**caractérisée en ce que**
la douille d'ajustage (1) est pourvue d'une protection de surface.

9. Barre d'accouplement pour véhicule automobile selon la revendication 8,
**caractérisée en ce que**
la protection de surface est un revêtement galvanique de zinc et de fer.
